**Europäisches Patentamt**

**European Patent Office**

**Office européen des brevets**

(11) Veröffentlichungsnummer: **0 200 256**
**B1**

(12) **EUROPÄISCHE PATENTSCHRIFT**

(45) Veröffentlichungstag der Patentschrift:
27.12.89

(51) Int. Cl.⁴: **C 03 C 25/02,** H 01 B 13/14,
B 05 C 3/12

(21) Anmeldenummer: **86200631.9**

(22) Anmeldetag: **15.04.86**

(54) **Verfahren und Vorrichtung zum Beschichten einer Faser.**

(30) Priorität: **19.04.85 NL 8501145**

(43) Veröffentlichungstag der Anmeldung:
**05.11.86 Patentblatt 86/45**

(45) Bekanntmachung des Hinweises auf die Patenterteilung:
**27.12.89 Patentblatt 89/52**

(84) Benannte Vertragsstaaten:
**AT BE CH DE FR GB IT LI NL SE**

(56) Entgegenhaltungen:
**EP-A-0 021 677**
**FR-A-2 381 324**
**GB-A-2 048 726**
**US-A-4 194 462**
**US-A-4 409 263**

**REVIEW OF THE ELECTRICAL COMMUNICATION
LABORATORIES, Band 32, Nr. 3, Mai 1984, Seiten
425-431, Tokyo, JP; K. CHIDA et al.: "High-speed
optical fiber drawing"**

(73) Patentinhaber: **N.V. Philips' Gloeilampenfabrieken,
Groenewoudseweg 1, NL- 5621 BA Eindhoven (NL)**

(72) Erfinder: **Jochem, Cornelis M. G., p/a INT.
OCTROOIBUREAU B.V. Prof. Holstlaan 6, NL-
5656 AA Eindhoven (NL)**
Erfinder: **van der Ligt, Jacobus W. C., p/a INT.
OCTROOIBUREAU B.V. Prof. Holstlaan 6, NL-
5656 AA Eindhoven (NL)**

(74) Vertreter: **Melio, Jan Dirk, INTERNATIONAAL
OCTROOIBUREAU B.V. Prof. Holstlaan 6, NL-
5656 AA Eindhoven (NL)**

## Beschreibung

Die Erfindung bezieht sich auf ein Verfahren zum Beschichten einer Faser, wobei eine zu beschichtende Faser durch einen eine eingeschnürte Eingangsöffnung aufweisenden Zufuhrkanal hindurchgeführt, durch eine mit flüssigem Beschichtungsmaterial gefüllte Druckkammer geführt und durch die Ausströmungsöffnung einer Düse gezogen wird, wobei das Beschichtungsmaterial der Druckkammer unter Druck zugeführt wird.

Die Erfindung bezieht sich ebenfalls auf eine Vorrichtung zum Durchführen des Verfahrens.

Fasern werden oft zum Schutz vor mechanischer Beschädigung, zur Isolierung, für Kodierungszwecke usw. mit einer Beschichtung versehen. So sollen beispielsweise Glasfasern, die für optische Kommunikation verwendet werden unmittelbar nach der Herstellung, nach dem Ziehen aus einem Tiegel oder von einer Vorform mit einer Schutzschicht bedeckt werden. Weil Glas ein spröder Werkstoff ist, ist die Stärke und die mechanische Zuverlässigkeit der Faser auf längere Frist von der Güte der Oberfläche der Faser stark abhängig. Kratzer, Haarrisse und Staubteilchen auf der Oberfläche der Faser sind nicht erlaubt. Zum Erhalten einer Faser mit einer einwandfreien Oberfläche sollen die Temperatur- und Gasverhältnisse in dem Ziehofen bzw. in dem Tiegel sorgfältig gewählt werden. Damit diese einmal erhaltene einwandfreie Oberfläche der Faser beibehalten wird, muss die Faser mit einer Schutzschicht bedeckt werden. Dieser Vorgang soll in einem ununterbrochenen Verfahren erfolgen, bevor die Faser irgendwie mit einem Fremdkörper in Berührung kommt. Staubfreie Umstände vor der Beschichtung der Faser sind von wesentlicher Bedeutung. Das Beschichtungsmaterial, meistens ein polymerer Kunststoff, wird in flüssiger Form angebracht und dann durch UV-Licht thermisch ausgehärtet. Die Beschichtung kann aus einer einzigen Kunststoffschicht oder aus zwei Schutzschichten bestehen; bei einer Doppelbeschichtung können zwei Kunststoffschichten oder eine erste Schicht aus einem relativ weichen Material, wie Silikonkautschuk oder einem "Hot Melt"-Wachs, und eine zweite Schicht aus Kunststoff aufgebracht werden. Es ist üblich auf einer allgemein verwendeten Normglasfaser mit einem Durchmesser von 125 μm eine Beschichtung mit einer Dicke von ca. 25 bis 60 μm anzubringen.

Grundsätzlich wird eine Glasfaser mit einer Beschichtung versehen, indem die Faser durch einen Behälter mit flüssigem Beschichtungsmaterial hindurchgeführt und dann durch die Ausströmungsöffnung einer Düse gezogen wird. Mit zunehmender Ziehgeschwindigkeit entsteht die Gefahr von Durchgleiten oder Durchrutschen ("slip"), d.h. die Faser verlässt die Ausströmungsöffnung gänzlich ohne Beschichtung oder mit Lücken in der Beschichtung. Durchrutschen oder Durchgleiten tritt dann auf, wenn die Schubkräfte auf der Grenzfläche zwischen Beschichtungsmaterial und Faser einen kritischen Wert überschreiten.

Weiterhin hat es sich herausgestellt, dass es in der Praxis sehr schwierig ist, die Beschichtung blasenfrei anzubringen, insbesondere bei hohen Ziehgeschwindigkeiten. Bereits bei Ziehgeschwindigkeiten von etwa 1,6 m/s ist die Konzentration an Blasen schon unzulässig gross. Die Blasen entstehen dadurch, dass z. B. bei Anwendung des Verfahrens mit einem offenen Gefäss die Faser einen tiefen Trichter bzw. Konus zieht beim Eintreten in das flüssige Beschichtungsmaterial, das sich in dem offenen Gefäss befindet. Eine verhältnismässig grosse Luftmenge wird durch die sich mit hoher Geschwindigkeit fortbewegende Faser in das Beschichtungsmaterial hineingerissen. Durch Zirkulation, Schwingungen u.ä. entstehen in dem Beschichtungsmaterial Lufteinschlüsse. Ein Teil dieser Lufteinschlüsse wird in Form von Blasen in der Beschichtung eingeschlossen. Die Ziehgeschwindigkeit ist die Geschwindigkeit, mit der die Faser gezogen und durch das Gefäss geführt wird. Der grösste Teil der Blasen sammelt sich an der Oberfläche des Beschichtungsmaterials an und bildet eine dicke Schaumschicht.

Blasen in der Beschichtung optischer Fasern sind äusserst unerwünscht: ein erster nachteiliger Effekt ist, dass die Faser exzentrisch in der Ausströmungsöffnung der Düse zu liegen kommt und nicht der Mittellinie der Ausströmungsöffnung folgt; die Faser nicht koaxial in Bezug auf die Beschichtung zu liegen kommt; Luftblasen können auch Abweichungen im Durchmesser und der Dicke der Beschichtung herbeiführen; grössere Luftblasen können sich durch nahezu die vollständige Dicke der Beschichtung erstrecken, so dass die Faser örtlich nicht bedeckt ist. Im allgemeinen beeinträchtigen Luftblasen in der Beschichtung die mechanischen und optischen Eigenschaften der Faser.

Ein anderes Beispiel einer mit einer Beschichtung zu bedeckenden Faser ist Kupferwickeldraht. Der in der Praxis verwendete Wickeldraht hat meistens einen Durchmesser zwischen 20 μm und 1250 μm. Dieser Draht wird mit einer elektrisch isolierenden Schicht bedeckt, die aus einer Lackschicht mit einer Dicke ab 4 μm für einen Draht mit einem Durchmesser von 20 μm bis zu einer Dicke vom 60 μm für einen Draht mit einem Durchmesser von 1250 μm besteht. Wegen der relativ geringen Dicke der Beschichtung ist für diese Art von Fasern eine blasenfreie Beschichtung unbedingt erforderlich.

Ein Verfahren der eingangs beschriebenen Art ist aus der US-Patentschrift 4 409 263 bekannt. Bei diesem zum Beschichten optischer Fasern bekannten Verfahren werden Luftblasen zunächst von der Faser mitgerissen, danach zu dem Behälter zurückgeführt, wo die Luftblasen an der Oberfläche des Beschichtungsmaterials in dem Behälter zerplatzen oder über einen Überlauf abgeführt werden. Nach der genannten Patentschrift kann gegenüber dem Verfahren mit einem offenen Gefäss mit diesem bekannten Verfahren die Anzahl Blasen in der Beschichtung wesentlich verringert werden und können Fasern mit einer nahezu blasenfreien Beschichtung versehen werden. Bei den genannten Versuchen wurden aber nur Blasen berücksichtigt mit einem Durchmesser von 25 μm oder mehr. Was die Ziehgeschwindigkeiten anbelangt ist nur erwähnt, dass der übliche Wert 1 m/s beträgt.

Die Erfindung hat nun zur Aufgabe, ein Verfahren zu schaffen, bei dessen Anwendung das Mitreissen von Luft und das Einschliessen von Blasen bereits von Anfang an weitgehend verringert ist und mit dem es möglich ist, Fasern mit geringeren Konzentrationen von Blasen und sogar blasenfrei, d.h. ohne mikroskopisch bei einer Vergrösserung von 200 wahrnehmbaren Blasen, zu beschichten und dies sogar bei bisher noch nicht angewandten sehr hohen Ziehgeschwindigkeiten.

Dies wird nach der Erfindung im wesentlichen dadurch erreicht, dass das Beschichtungsmaterial mit einem derartigen Druck und in einer derartigen Menge zugeführt wird, dass es in dem Zufuhrkanal bis zu einer bestimmten Höhe steigt und einen konvexen Meniskus bildet.

Durch eine geeignete Wahl des Druckes und der je Zeitenheit zugeführten Menge des Beschichtungsmaterials wird in dem Zufuhrkanal eine stationäre Situation erhalten ohne Strömungen und ohne Turbulenz in dem Beschichtungsmaterial. Je nach Druck und zugeführter Menge Beschichtungsmaterial kann sich der Meniskus im Zufuhrkanal selbst oder in der Eingangsöffnung desselben bilden, in einer bestimmten stabilisierten Höhenlage. Es hat sich herausgestellt, dass die Faser keinen mit dem Auge wahrnehmbaren Trichter in dem Beschichtungsmaterial zieht, so dass das Mitreissen von Luft und das Einschliessen von Luftblasen überhaupt vermieden wird. Aufwendige und schwer beherrschbare Massnahmen zum Entfernen einmal mitgerissener Luftblasen sind daher beim erfindungsgemässen Verfahren nicht erforderlich.

Es sei bemerkt, dass aus der US Patentschrift 4 374 161 ein Verfahren zum Beschichten von Fasern bekannt ist, bei dem Beschichtungsmaterial unter einem relativ hohen Druck einem Durchführungskanal zugeführt wird und bei dem das Beschichtungsmaterial an der Eingangsöffnung des Durchführungskanals eine Verdickung bildet. Jedoch während des Beschichtens der Faser wird in der Verdickung durch die sich fortbewegende Faser ein Trichter gezogen. Nach der Patentschrift tritt im Betrieb durch in dem Beschichtungsmaterial eingeschlossene Blasen gebildeter Schaum nach außen.

Bei einer bevorzugten Ausführungsform des erfindungsgemässen Verfahrens wird die Faser der Druckkammer von der eingeschnürten Eingangsöffnung aus über einen Führungskanal zugeführt. Durch diese Massnahme ist es möglich von der eingeschnürten Eingangsöffnung aus in Richtung der Druckkammer an der Faser entlang einen Druckgradienten aufzubauen, wodurch das Eindringen von Luftblasen weiter erschwert wird.

Es sei bemerkt, dass bei dem Verfahren nach der bereits genannten US Patentschrift 4 409 263, im Gegensatz zu dem erfindungsgemässen Verfahren, die verengte Eingangsöffnung auf der Ausgangsseite unmittelbar in eine Druckkammer mündet und an der Eingangsseite an einen Zuführungskanal anschliesst; dabei erfolgt ein wesentlicher schroffer Druckaufbau erst in der eingeschnürten Eingangsöffnung; Luftblasen können frei in den Zuführungskanal eintreten.

Eine weitere bevorzugte Ausführungsform des erfindungsgemässen Verfahrens weist das Kennzeichen auf, dass die Temperatur des in der Druckkammer vorhandenen Beschichtungsmaterials derart eingestellt wird, dass eine Beschichtung mit der gewünschten Dicke erhalten wird. Die Dicke der Beschichtung wird an erster Stelle durch die Abmessungen der Ausströmungsöffnung in der Düse bestimmt und durch die Viskosität des in der Druckkammer befindlichen Beschichtungsmaterials beeinflusst. Bei Abweichungen der gewünschten Dicke der Beschichtung wird nach der Erfindung die Temperatur und dadurch die Viskosität des Beschichtungsmaterials in der Druckkammer derart nachgeregelt, dass die gewünschte Dicke beibehalten wird.

Versuche haben gezeigt, dass mit dem erfindungsgemässen Verfahren Fasern bei Ziehgeschwindigkeiten von etwa 2,5 m/s mit einer völlig blasenfreien Beschichtung versehen werden können. Dabei wird über der Eingangsöffnung eine normale Luftatmosphäre beibehalten. Bei Geschwindigkeiten ab etwa 3 m/s ist das Verfahren nicht mehr reproduzierbar und es kann wieder Blasenbildung auftreten, sei es dass dies auf Blasen mit einem Durchmesser von kleiner als 25 µm und zwar von maximal 15 µm und in geringerer Konzentration beschränkt bleibt.

Es hat sich herausgestellt, dass die Ziehgeschwindigkeit, bei der eine Faser auf reproduzierbare Weise über grosse Längen blasenfrei beschichtet werden kann, weiter gesteigert werden kann; dazu weist eine weitere bevorzugte Ausführungsform des erfindungsgemässen Verfahrens das Kennzeichen auf, dass über der Eingangsöffnung und über dem Meniskus eine Gasatmosphäre erzeugt und beibehalten wird, die aus einem Gas mit einer niedrigeren kinematischen Viskosität als die von Luft besteht; Luft hat eine kinematische Viskosität von $14,8 \cdot 10^{-6}$ m$^2$/s bei einer Temperatur von 20° C. Bekanntlich ist die kinematische Viskosität

$\nu = \eta/\rho$, wobei
$\eta$ = dynamische Viskosität in Pa.s und
$\rho$ = Dichte in kg/m$^3$.

Dadurch, dass die Umgebung der Stellen, wo Faser und Beschichtungsmaterial sich begegnen, mit einem Gas umspült wird, dessen kinematische Viskosität relativ niedrig ist, niedriger als die von Luft mit $\nu$ $14,8 \cdot 10^{-6}$ m$^2$/s wird die Gefahr der Blasenbildung weiter verringert wahrscheinlich dadurch, dass ein derartiges Gas von der Faser weniger leicht mitgerissen wird.

Versuche haben gezeigt, dass bei Verwendung von Xenon als Gas mit einer kinematischen Viskosität von $3,8 \cdot 10^{-6}$ m$^2$/s die etwa um einen Faktor 4 kleiner ist als die von Luft, auch bei Ziehgeschwindigkeiten von 3 m/s eine Faser mit einer blasenfreien Beschichtung versehen werden kann und zwar auf reproduzierbare Weise und über grössere Längen, d.h. über Längen von einigen Kilometern. Die benötigten Mengen Gas sind gering, in der Grössenordnung von 15 cm$^3$/s.

Überraschenderweise hat es sich herausgestellt, dass die Ziehgeschwindigkeit, bei der eine Faser noch absolut blasenfrei beschichtet werden kann, noch weiter gesteigert werden kann, etwa um einen Faktor 4, bis an bisher für unmöglich gehaltene Werte. Dazu wird bei einer anderen bevorzugten Ausführungsform des erfindungsgemässen Verfahrens als Gas Dichlorfluormethan verwendet. Bei Verwendung dieses Gases wurde sogar bei Ziehgeschwindigkeiten von 12 m/s einen blasenfreie Beschichtung auf der Faser angebracht. Das genannte Gas hat eine kinematische Viskosität von $2,3 \cdot 10^{-6}$ m²/s, die also um einen Faktor 6,4 niedriger ist als die von Luft. Dichlorfluormethan ist in grossen Mengen verfügbar und ist relativ preisgünstig, auf jeden Fall preisgünstiger als Xenon. Möglicherweise kann die Ziehgeschwindigkeit noch weiter gesteigert werden. Bei Versuchen wurde die maximale Ziehgeschwindigkeit auf 12 m/s beschränkt, weil die für die Versuche verfügbare Ziehanlage keine höhere Ziehgeschwindigkeit zuliess.

Eine Faser mit einer Beschichtung, angebracht nach dem erfindungsgemässen Verfahren ist absolut blasenfrei, d.h. dass die Beschichtung keine mikroskopisch wahrnehmbaren Blasen enthält, auf jeden Fall keine Blasen mit einem Durchmesser grösser als 1 bis 2 µm.

Wie bereits erwähnt, ist eine blasenfreie Beschichtung insbesondere von Bedeutung für optische Glasfasern und für Kupferwickeldraht.

Selbstverständlich kann die Erfindung auf ebenso vorteilhafte Weise zum Beschichten von Fasern mit einer anderen Zusammenstellung gewandt werden, z. B. Kunststofffasern, Metallfasern im allgemeinen u.v.a.

Die Erfindung bezieht sich ebenfalls auf eine Vorrichtung Durchführen des Verfahrens mit einem Gehäuse mit einer Druckkammer, einer Düse mit einer Ausströmungsöffnung, einem Absperrteil mit einem eine eingeschnürte Eingangsöffnung aufweisenden Zufuhrkanal, welches die Druckkammer auf der Oberseite absperrt, einer Zuführungsöffnung in der Wand des Gehäuses zum Zuführen flüssigen Beschichtungsmaterials und einer Überlauföffnung in der Seitenwand des Gehäuses; diese Vorrichtung weist nach der Erfindung das Kennzeichen auf, dass die Überlauföffnung in der Seitenwand des Gehäuses auf einer Höhe angebracht ist, die niedriger ist als die Ebene der eingeschnürten Eingangsöffnung. Durch diese Massnahme wird erreicht, dass die eingeschnürte Eingangsöffnung für die Faser niemals durch das Beschichtungsmaterial überflutet werden kann und dass das Beschichtungsmaterial immer einen konvexen Meniskus im Zufuhrkanal bzw. in dessen Eingangsöffnung bilden kann, wodurch vermieden wird, dass Luftblasen von der Faser mitgerissen werden. Die Vorrichtung nach der Erfindung bildet ein geschlossenes Beschichtungsgefäss mit Zufuhr des Beschichtungsmaterials unter Druck.

Der eingeschnürte Zufuhrkanal mit der Eingangsöffnung kann unmittelbar in der Absperrwand angebracht werden. Wenn aber der Zufuhrkanal einen Führungskanal für die Führung einer zu beschichtenden Faser aufweist, bildet der Führungskanal bei einer bevorzugten Ausführungsform der erfindungsgemässen Vorrichtung eine Verbindung zwischen der eingeschnürten Eingangsöffnung und der Druckkammer, m.a.W. die eingeschnürte Eingangsöffnung befindet sich an dem von der Druckkammer abgewandten freien Ende des Führungskanals.

Eine weitere bevorzugte Ausführungsform der erfindungsgemässen Vorrichtung ist gekennzeichnet durch ein rohrförmiges Element, das den Zufuhrkanal mit der eingeschnürten Eingangsöffnung und dem Führungskanal aufweist und das austauschbar an dem Absperrteil befestigt ist. Die Vorrichtung kann zum Beschichten von Fasern mit unterschiedlichen Durchmessern durch Austausch der Düse und durch Ersetzen des rohrförmigen Elementes durch ein Element, dessen eingeschnürte Eingangsöffnung und/oder Führungskanal andere Abmessungen hat, auf einfache Weise angepasst und geändert werden.

Bei einer anderen bevorzugten Ausführungsform der erfindungsgemässen Vorrichtung ist das rohrförmige Element aus Polytetrafluoräthylen hergestellt. Der genannte Kunststoff wird von den meisten Flüssigkeiten, unter denen das Beschichtungsmaterial, nicht benetzt, wodurch die Bildung eines konvexen Meniskus des Beschichtungsmaterials im Zufuhrkanal bzw. in dessen Eingangsöffnung erleichtert wird.

Wie bereits erläutert, kann die Ziehgeschwindigkeit, bei der es noch möglich ist, eine Faser ohne Blasenbildung zu beschichten, wesentlich dadurch gesteigert werden, dass die Umgebung der Eingangsöffnung mit einem Gas umspült wird, dessen kinematische Viskosität niedriger ist als die von Luft. Dazu weist eine weitere bevorzugte Ausführungsform der erfindungsmässen Vorrichtung das Kennzeichen auf, dass das Gehäuse durch einen Deckel mit einer zentralen Durchgangsöffnung abgeschlossen und mit einer Zuführungsöffnung zum Zuführen eines Gases zu dem zwischen dem Absperrteil und dem Deckel liegenden Raum des Gehäuses versehen ist. Mit diesen ziemlich einfachen Vorkehrungen kann die Eingangsöffnung mit Gas umspült werden.

Bei einer anderen bevorzugten Ausführungsform der erfindungsgemässen Vorrichtung weist das Gehäuse eine Umlaufkammer auf, die den der Ausströmungsöffnung zugewandten Teil der Druckkammer umgibt. Durch Regelung der Temperatur von Wasser, das durch die Umlaufkammer strömt, kann die Temperatur und die Viskosität des in der Druckkammer vorhandenen Beschichtungsmaterials auf verzögerungsarme Weise derart beeinflusst werden, dass die Dicke der angebrachten Beschichtung konstant bleibt.

Eine Ausführungsbeispiel der Erfindung ist in der Zeichnung dargestellt und wird im folgenden näher beschrieben. Es zeigen:

| | |
|---|---|
| Fig. 1 | eine schematische Darstellung einer Anlage zum Ziehen optischer Fasern, |
| Fig. 2 | einen Längsschnitt durch eine Vorrichtung nach der Erfindung zum Beschichten von Fasern, |
| Fig. 3 | einen Schnitt durch die Vorrichtung gemäss der Linie III-III in Fig. 2, |
| Fig. 4 | eine schematische Darstellung der Regelvorrichtung zum Zuführen von Gas und von Beschichtungsmaterial, |
| Fig. 5 und 6 | eine photographische Vergrösserung einer optischen Faser, die nach dem Verfahren gemäss der Erfindung beschicht wurde in einem Maßstab von 80 : 1, |
| Fig. 7 | einen Teil der Vorrichtung in grösserem Maßstab, und |
| Fig. 8 | in graphischer Darstellung die Abhängigkeit des Durchmessers einer beschichteten Faser von der Viskosität des Beschichtungsmaterials. |

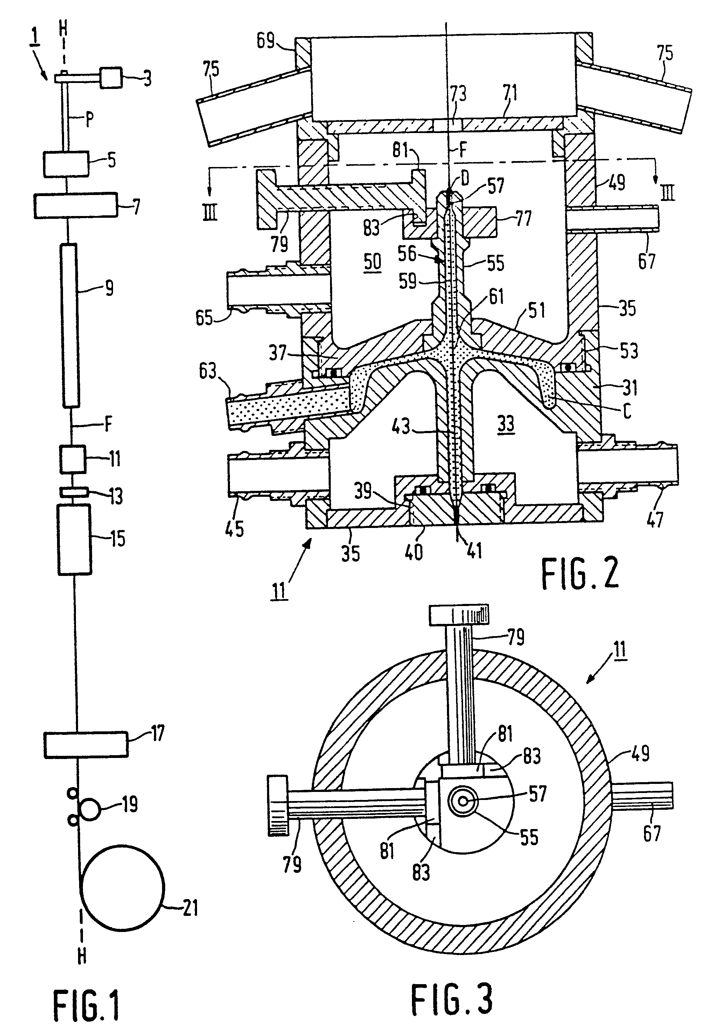

Die Erfindung wird anhand eines Ausführungsbeispiels zum Beschichten einer optischen Faser näher erläutert. Dazu dient die in Fig. 1 auf schematische Weise dargestellte an sich bekannte Anlage 1 mit einer Halterung 3 für eine Vorform P, einem Ziehofen 5, einer Messvorrichtung 7 zum Messen des Faserdurchmessers, einer Kühlvorrichtung 9, einer Beschichtungsvorrichtung 11 zum Anbringen einer Beschichtung, einer Prüfvorrichtung 13 zum Überprüfen der konzentrischen Lage der Faser und der Beschichtung, einer Aushärtevorrichtung 15, einer Messvorrichtung 17 zum Messen des Durchmessers der beschichteten Faser, einem Tensiometer 19 zum Messen der Ziehkraft sowie einer Ziehvorrichtung, die in dem dargestellten Ausführungsbeispiel als Aufwickelhaspel 21 ausgebildet ist. Für das oft verwendete UV-härtende Beschichtungsmaterial wird eine mit UV-Licht arbeitende Aushärtevorrichtung verwendet.

Die Ziehofen 5, die Messvorrichtungen 7 und 17, die Kühlvorrichtung 9, die Prüfvorrichtung 13 und die Aushärtevorrichtung 15 können von an sich bekannter Konstruktion sein und bilden keinen Teil der vorliegenden Erfindung.

Diese Anlage 1 wird auf an sich bekannte Weise wie folgt betrieben. Aus einer Vorform P wird durch Erhitzung in dem Ziehofen 5 eine Faser F gezogen, wobei die Ziehgeschwindigkeit mittels der Durchmesser-Messvorrichtung 7 derart geregelt wird, dass der Durchmesser der Faser F möglichst konstant ist. Die Faser F wird in der Kühlvorrichtung 9 abgekühlt bis zu einer Temperatur, bei der eine Beschichtung aus Kunststoff angebracht werden kann. Das Beschichten der Faser erfolgt in der Beschichtungsvorrichtung 11. Nachdem die beschichtete Faser in der Prüfvorrichtung 13 auf die einwandfreie konzentrische Lage der Faser und der Beschichtung überprüft worden ist, wird die Faser F durch die Aushärtevorrichtung 15 hindurchgeführt zum Aushärten der Beschichtung. In der Durchmesser-Messvorrichtung 17 wird der Durchmesser der beschichteten Faser und in dem Tensiometer 19 die Ziehkraft gemessen. Die fertige Faser wird auf die Haspel 21 aufgewickelt, die für den weiteren Transport der Faser F durch die Anlage 1 sorgt.

Die Fig. 2 und 3 zeigen die Beschichtungsvorrichtung 11 in einer Ausführungsform nach der Erfindung. Die Vorrichtung 11 ist von der sogenannten geschlossenen Bauart mit Zufuhr des Beschichtungsmaterials unter Druck und weist dazu ein Gehäuse 31 mit einer Umlaufkammer 33, einem Bodenteil 35 und einem Absperrteil 37 auf. In dem Bodenteil 35 ist mittels einer Schraubverbindung 39 eine Düse 40 austauschbar angebracht, die mit einer Ausströmungsöffnung 41 versehen ist, die sich an einen Ausströmungskanal 43 anschliesst. Die Anschlüsse 45 und 47 dienen für die Zirkulation von warmem Wasser durch die Umlaufkammer 33. Der Absperrteil 37 weist einen zylinderförmigen Wandteil 49 und einen sich in der Querrichtung erstreckenden Wandteil 51 auf, die einen Raum 50 einschliessen und ist mittels einer Schraubverbindung 53 an dem Gehäuse 31 befestigt. Zentral in dem Wandteil 51 ist ein rohrförmiges Element 55 austauschbar befestigt, wobei dieses Element einen Zufuhrkanal 56 mit einer eingeschnürten Eingangsöffnung 57 und einem Führungskanal 59 und eine Stirnfläche 60 aufweist. Die Querwand 51 schliesst eine Kammer 61 ab die als Druckkammer dient. Ein Anschluss 63 dient zum Zuführen von Beschichtungsmaterial C unter Druck zu der Kammer 61. Eine Ausströmungsöffnung 65 ist als Überlauf wirksam und dient zum Abführen etwaigen überströmenden Beschichtungsmaterials. In dem Wandteil 49 ist eine weitere Zuführungsöffnung 67 zum Zuführen eines Gases vorgesehen. Ein Deckel 69 mit einer Absperrwand 71 mit einer zentralen Durchlassöffnung 73 und mit Anschlüssen 75 dient zur forcierten Abfuhr von Gas mittels eines weiterhin nicht dargestellten Absaugsystems. Alle Teile mit Ausnahme des Rohrelementes 55 und der Absperrwand 71 sind aus rostfreiem Stahl hergestellt. Die Teile, die mit dem Beschichtungsmaterials in Berührung kommen sind poliert und ohne scharfe Kanten oder tote Ecken ausgebildet. Das Rohrelement 55 ist elastisch verformbar und ist vorzugsweise aus Polytetrafluoräthylen gefertigt. In Höhe der Eingangsöffnung 57 ist auf dem Rohrelement 55 ein Einstellblock 77 befestigt. In der zylinderförmigen Wand 49 sind zwei senkrecht aufeinander stehende Einstellschrauben 79 gelagert, die mit Scheiben oder Rädchen 81 versehen sind, welche mit geradlinigen Führungsrillen 83 in dem Einstellblock 77 zusammenwirken. Die Absperrwand 7 ist aus Glas hergestellt, damit eine Beobachtung mit dem blossen Auge möglich ist.

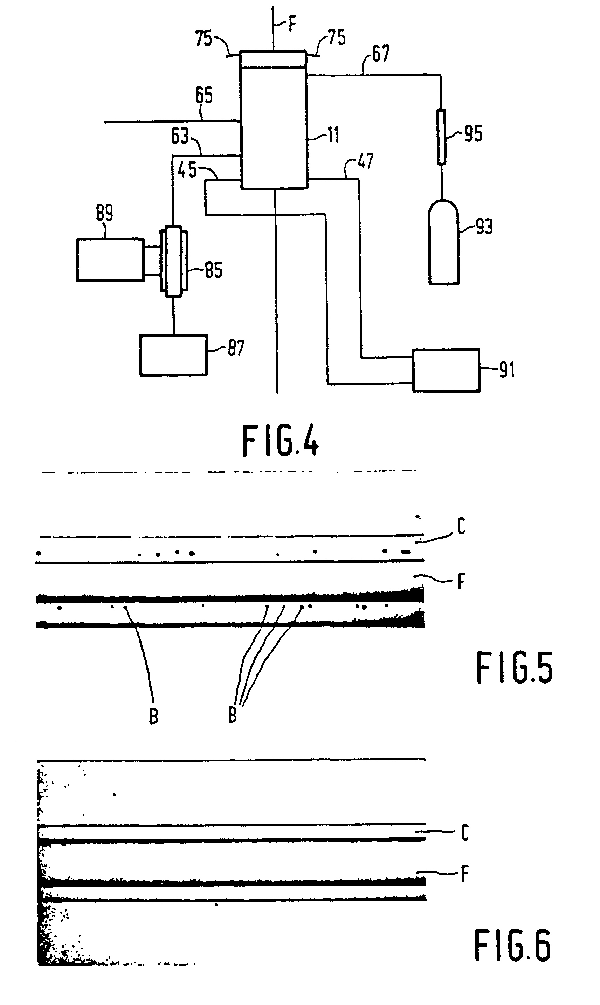

Fig. 4 zeigt auf schematische Weise ausser der Beschichtungsvorrichtung 11 die notwendigen Elemente zum Zuführen des Beschichtungsmaterials und des Gases sowie zur Zirkulation des Wassers in der Umlaufkammer 33. Durch 85 ist ein Vorratsgefäss bezeichnet, in dem eine bestimmte Menge Beschichtungsmaterial unter Druck und bei einer bestimmten Temperatur gespeichert ist. Durch 87 ist eine Druckregelvorrichtung bezeichnet. Das Beschichtungsmaterial wird mittels warmen Wassers auf eine bestimmte Temperatur gebracht, wobei die Zufuhr des Wassers mittels eines Thermostaten 89 geregelt wird. Beim Anwärmen des Beschichtungsmaterials erfolgt zugleich Entgasung, so dass alle Luftblasen daraus verschwinden. Durch 91 ist ein anderer Thermostat dargestellt, der die Zufuhr von warmem Wasser zu der Umlaufkammer 33 regelt. Das Gas mit einer niedrigen kinematischen Viskosität befindet sich unter Druck in einer Gasflasche 93. Die Ausströmungsmenge des Gases wird mit Hilfe des Durchströmungsmessers 95 gemessen und eingestellt. Die weiteren schematisch dargestellten Elemente sind obenstehend bereits beschreiben.

Zum Starten der beschriebenen Vorrichtung zum Beschichten einer optischen Faser mit einem Durchmesser von z. B. 125 µm wird zunächst von der Vorform P bei relativ niedriger Ziehgeschwindigkeit eine Faser mit allmählich abnehmendem Druchmesser gezogen bis der Faserdurchmesser etwa 125 beträgt. Die Faser wird dann gebrochen und nun durch die Beschichtungsvorrichtung 11 und die Aushärtevorrichtung 15 gezogen und auf der Hapsel 21 befestigt. Danach wird der Ziehvorgang fortgesetzt, die Aushärtevorrichtung 15 wird eingeschaltet und es wird Beschichtungsmaterial C, ein UV-härtendes Akrylat, aus dem Vorratsbehälter 85, in dem es auf einer Temperatur von 65 bis 70°C gehalten wird, durch den Anschluss 63 zu der Druckkammer 61 gepresst. In der Umlaufkammer 33 wird durch den Heizkreis eine Temperatur von 45 - 50°C beibehalten, bei welcher Temperatur das Beschichtungsmaterial eine dynamische Viskosität von 1,3 Pa.s hat. Aus der Druckkammer 61 wird das Beschichtungsmaterial C zum Teil durch den Ausströmungskanal 43 zu der Ausströmungsöffnung 41 in der Düse 40 gepresst; auf diesem Weg wird das Beschichtungsmaterial von der Faser F aufgenommen. Ein anderer Teil des Beschichtungsmaterials wird von der Druckkammer 61 in den Führungskanal 59 gepresst und steigt aus bis zu der Eingangsöffnung 57. Zunächst entstehen beim Zuführen des Beschichtungsmaterials zu der Beschichtungsvorrichtung 11 viele Luftblasen in dem Beschichtungsmaterial. Beim allmählichen Steigern der Ziehgeschwindigkeit bis zum gewünschten Wert wird ein Übermass an Beschichtungsmaterial zugeführt, das über den Führungskanal 59, die Eingangsöffnung 57, den Raum 50 und zum Schluss den Überlauf 65 abgeführt wird. Dadurch wird die Beschichtungsvorrichtung 11 durchspült und die Blasen, die in der Anfangsphase entstehen, werden aus dem System entfernt. Mit zunehmender Ziehgeschwindigkeit wird der Druck auf das Beschichtungsmaterial gesteigert. Wenn die gewünschte Ziehgeschwindigkeit erreicht ist, wird der Druck auf das Beschichtungsmaterial in dem Vorratsgefäss 85 auf einen derartigen Wert eingestellt, dass die Lage sich stabilisiert und das Beschichtungsmaterial im Zufuhrkanal 56, im dargestellten Ausführungsbeispiel in der Eingangsöffnung 57 einen konvexen Meniskus D bildet. Die Bildung dieses Meniskus wird dadurch erleichtert, dass das Rohrelement aus Polytetrafluoräthylen hergestellt ist, welches durch das Beschichtungsmaterial nicht benetzt wird. Im weiteren Verlauf bleibt diese Situation stabil und unveränderlich. In der eingeschnürten Eingangsöffnung 57 und in dem anschliessenden Teil des Führungskanal 59 erfolgt kein Umlauf des Beschichtungsmaterials und keine Blasenbildung. Es hat sich herausgestellt, dass durch diese Massnahmen bis zu einer Ziehgeschwindigkeit von 2,5 m/s auf der Faser eine Beschichtung ohne Blasen angebracht werden kann. Bei höheren Ziehgeschwindigkeiten von etwa 3 m/s werden Blasen in der Beschichtung eingeschlossen, aber gegenüber den bisher bekannten Beschichtungsverfahren in einer viel niedrigeren Konzentration.

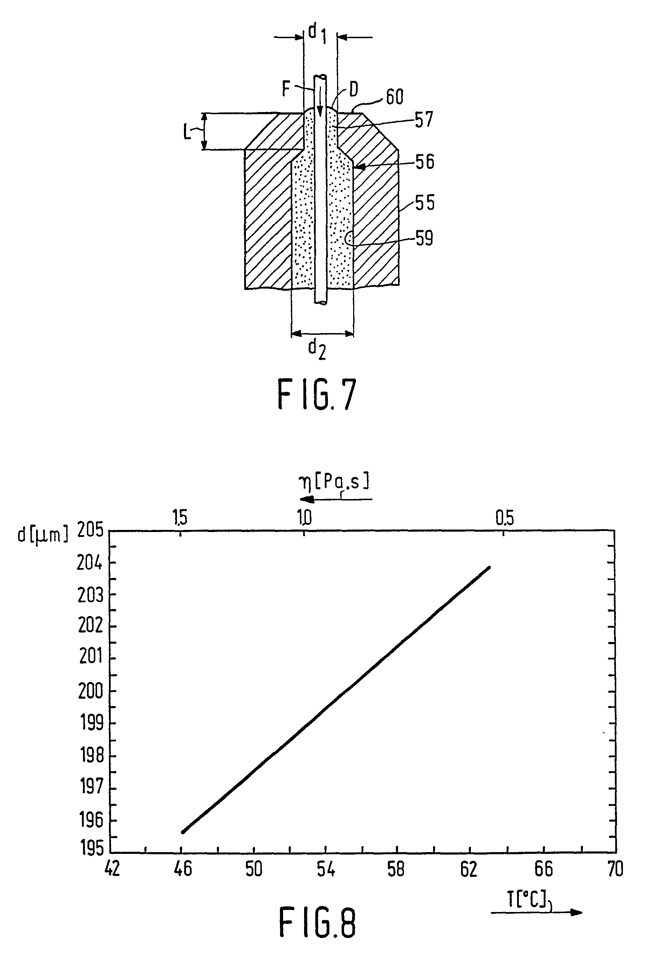

Fig. 7 ziegt einen Teil des rohrförmigen Elementes 55, in welchem der Zufuhrkanal 56 mit der eingeschnürten Eingangsöffnung 57 und dem Führungskanal 59 angebracht ist. Mit $d_1$ ist der Durchmesser der eingeschnürten Eingangsöffnung und mit $d_2$ der Durchmesser des Führungskanals angedeutet; mit L ist die Länge des Eingangsöffnung bezeichnet. In dieser Figur ist der konvexe Meniskus D in der eingeschnürten Eingangsöffnung 57 deutlich zu sehen.

Durch Versuche hat es sich herausgestellt, dass eine eingeschnürte Eingangsöffnung mit einem Durchmesser $d_1$ von 0,9 bis 1,1 mm und mit einer Länge L von 2 mm für Ziehgeschwindigkeiten bis 3 m/s geeignet ist. Der Führungskanal 59 hatte eine Länge von 30 mm und einen Durchmesser $d_2$ von 2 mm. In dem Vorratsbehälter wurde ein Druck von 300 kPa beibehalten. Zum Beschichten einer Faser mit einem ursprünglichen Durchmesser von 125 μm bis zu einem Durchmesser von 250 μm einschliesslich der Beschichtung wurde eine Düse 40 verwendet, deren Ausströmungsöffnung 41 einen Durchmesser von 350 μm und eine Länge von 3 mm hatte.

Fig. 5 zeigt eine photographische Vergrösserung (80 x), aufgenommen nach dem Lichtdurchfall-Verfahren, einer Faser F mit einem Durchmesser von 125 μm mit einer Beschichtung C mit einer Schichtdicke von 60 μm, aufgetragen mit dem erfindungsgemässen Verfahren bei einer Ziehgeschwindigkeit von 3 m/s; die Konzentration an Blasen ist äusserst gering; die wahrnehmbaren Blasen sind kleiner als 8 bis 10 μm. Fasern, die bei einer Ziehgeschwindigkeit von 2,5 m/s beschichtet wurden, waren völlig blasenfrei.

Die Dicke der Beschichtung wird auch durch die Temperatur des Beschichtungsmaterials und folglich durch die dynamische Viskosität desselben beeinflusst. Es hat sich herausgestellt, dass die Schichtdicke auf einfache und wirksame Weise durch eine genaue und verzögerungsarme Regelung der Temperatur und folglich der Viskosität des Beschichtungsmaterials durch Zirkulation von warmen Wasser in der Umlaufkammer 33 kontrollierbar ist. Der Durchmesser der beschichteten Faser konnte auf diese Weise mit einer Genauigkeit von ± 0,5 μm eingestellt werden.

Das Diagramm gemäss Fig. 8 zeigt den Durchmesser d einer beschichteten Faser in Abhängigkeit von der Temperatur T bzw. der dynamischen Viskosität η des Beschichtungsmaterials. Der Durchmesser der unbeschichteten Faser betrug 125 μm. Der Durchmesser der Ausströmungsöffnung 41 In der Düse 40 betrug 260 μm. Das verwendete Beschichtungsmaterial war ein handelsübliches UV-hartendes Acrylat. Mit steigender Temperatur T nimmt der Durchmesser d der beschichteten Faser zu bei gleichbleibender Ausströmungsöffnung.

Eine völlig blasenfreie Beschichtung kann auch bei Ziehgeschwindigkeiten von 3 m/s und höher auf Fasern angebracht werden, unter Anwendung einer weiteren Massnahme nach der Erfindung und zwar dadurch, dass in der Umgebung der Eingangsöffnung 57 und über dem Meniskus D eine Gasatmosphäre erzeugt und beibehalten wird, wobei die kinematische Viskosität dieses Gases niedriger ist als die von Luft. Dieses Gas wird über die Gaszufuhr 67 zugeführt, strömt durch den Raum 50, umspült die Eingangsöffnung 57 und den konvexen Meniskus D des Beschichtungsmaterials und verlässt den Raum 50 über die zentrale Öffnung 73 in dem Deckel 69. Über die Gasabführungsleitungen 75 kann dieses Gas wieder abgeführt werden.

In der untenstehenden Tafel sind einige verwendbare Gase erwähnt.

| Gas | v | R |
|---|---|---|
| Luft | 14,8 | 1 |
| Ar | 12,3 | 0,83 |
| Xe | 3,8 | 0,26 |
| *C Cl2F2 | 2,3 | 0,16 |

(*C Cl2F2 = Dichlordifluormethan)

Dabei ist:
v die kinematische Viskosität in $10^{-6}$ m²/s bei 20°C.
R das Verhältnis v Gas/v Luft.

Wenn beim Beschichten einer Faser wie oben beschrieben im Zusammenhang mit Fig. 5, Xenon als Spülgas verwendet wird, bleibt die Beschichtung bei der gleichen Ziehgeschwindigkeit von 3 m/s und bei weiteren gleichbleibenden Parametern vollständig frei von Blasen.

Die Ziehgeschwindigkeit, bei der eine Faser ohne Blasenbildung beschichtet werden kann, lässt sich weiter um einen Faktor 4 steigern, in dem ein Gas verwendet wird, dessen kinematische Viskosität nur 15 % derjenigen von Luft beträgt, und zwar Dichlordifluormethan.

Fig. 6 zeigt in derselben Vergrösserung von 80 x wie Fig. 5 eine, mit einer Beschichtung mit einer Schichtdicke von 50 μm versehene Faser, die bei einer Ziehgeschwindigkeit von 12 m/s beschichtet wurde unter Verwendung von $C Cl2F2$ als Spülgas. Sogar bei der dargestellten Vergrösserung ist keine einzige Blase wahrnehmbar. Das Gas wurde in einer Menge von 13 $cm^3$/s zugeführt. In dem Vorratsgefäss 85 wurde ein Druck von 600 kPa beibehalten. Die Abmessungen der Eingangsöffnung 57 und des Führungskanals 59 waren dieselben wie bei dem ersten Ausführungsbeispiel. Das Ergebnis hat sich als über grosse Längen, d.h. über Längen von einigen Kilometern als reproduzierbar erwiesen. Die erreichte Ziehgeschwindigkeit von 12 m/s war die höchste Geschwindigkeit, welche die für die Versuche verfügbare Ziehanlage zuliess. Wegen der aussergewöhnlichen Ergebnisse und der besonderen Effekte ist es wahrscheinlich, dass noch höhere Geschwindigkeiten möglich sind.

Alle Teile der Ziehanlage 1 sind genau entsprechend der gemeinsamen Mittellinie H-H, mit der die Mittellinie der Faser F zusammenfällt ausgerichtet, damit eine radialsymmetrische Beeinflussung der Faser und zwar Erwärmen, Kühlen, Aushärten erhalten wird. Auch die Beschichtung soll koaxial bzw. konzentrisch zur Faser angebracht werden, d.h. die Dicke der Beschichtung soll über den Umfang der Faser gesehen konstant sein. Eine Faser mit einer nicht konzentrischen Beschichtung ist bei Abkühlung und Erhitzung nicht-konzentrischen asymmetrischen Kräften ausgesetzt. Diese asymmetrischen Kräfte sind die Folge ungleicher Ausdehnungskoeffizienten des Faser- und Beschichtungsmaterials und können zu unerwünschten Änderungen der optischen Eigenschaften der Faser führen.

Die konzentrische Lage der Faser und der Beschichtung wird mit Hilfe der Prüfvorrichtung 13 ständig gemesen. Ein Fehler in der Konzentrizität kann bei der dargestellten Vorrichtung auf einfache Weise dadurch korrigiert bzw. vermieden werden, dass das elastisch verformbare Rohrelement 55, das aus Polytetrafluoräthylen besteht, mittels der Einstellschrauben 79 eingestellt und gegebenenfalls etwas verbogen wird. Dadurch kann die Eingangsöffnung 57 derart zentriert bzw. eingestellt werden, dass die Beschichtung wieder konzentrisch um die Faser zu liegen kommt. Weitere Einstellungen bzw. Nachregelungen sind nicht erforderlich. Die Lage der Düse 40 mit der Ausströmungsöffnung bleibt ungeändert, fluchtend und koaxial zu der Mittellinie H-H der Anlage.

## Patentansprüche

1. Verfahren zum Beschichten einer Faser, wobei eine zu beschichtende Faser durch einen eine eingeschnürte Eingangsöffnung aufweisenden Zufuhrkanal hindurchgeführt, durch eine mit flüssigem Beschichtungsmaterial gefüllte Druckkammer geführt und durch die Ausströmungsöffnung einer Düse gezogen wird, wobei das Beschichtungsmaterial der Druckkammer unter Druck zugeführt wird, dadurch gekennzeichnet, dass das Beschichtungsmaterial mit einem derartigen Druck und in einer derartigen Menge zugeführt wird, dass es in dem Zufuhrkanal bis zu einer bestimmten Höhe steigt und einen konvexen Meniskus bildet.

2. Verfahren nach Anspruch 1 dadurch gekennzeichnet, dass die Faser der Druckkammer von der eingeschnürten Eingangsöffnung aus über einen Führungskanal zugeführt wird.

3. Verfahren nach Anspruch 1 oder 2, dadurch gekennzeichnet, dass die Temperatur des in der Kammer vorhandenen Beschichtungsmaterials derart eingestellt wird, dass eine Beschichtung mit der gewünchten Dicke erhalten wird.

4. Verfahren nach Anspruch 1 2 oder 3, dadurch gekennzeichnet, dass über der Eingangsöffnung eine Gasatmosphäre erzeugt und beibehalten wird, die aus einem Gas mit einer niedrigeren kinematischen Viskosität als die von Luft besteht.

5. Verfahren nach Anspruch 4, dadurch gekennzeichnet, dass als Gas Xenon verwendet wird.

6. Verfahren nach Anspruch 4, dadurch gekennzeichnet, dass als Gas Dichlordifluormethan verwendet wird.

7. Vorrichtung zum Durchführen des Verfahrens nach einem der Ansprüche 1 bis 6 mit einem Gehäuse mit einer Druckkammer, einer Düse mit einer Ausströmungsöffnung einem Absperrteil mit einem eine eingeschnürten Eingangsöffnung aufweisenden Zufuhrkanal welches die Druckkammer auf der Oberseite absperrt, einer Zuführungsöffnung in der Wand des Gehäuses zum Zuführen flüssigen Beschichtungsmaterials und mit einer Überlauföffnung in der Seitenwand des Gehäuses, dadurch gekennzeichnet, dass die Überlauföffnung in der Seitenwand des Gehäuses auf einer Höhe angebracht ist, die niedriger ist als die Ebene der Eingangsöffnung.

8. Vorrichtung nach Anspruch 7, wobei der Zufuhrkanal einen Führungskanal zum Führen einer zu beschichtenden Faser aufweist, dadurch gekennzeichnet, dass der Führungskanal eine Verbindung bildet zwischen der eingeschnürten Eingangsöffnung und der Druckkammer.

9. Vorrichtung nach Anspruch 8, gekennzeichnet durch ein rohrförmiges Element, das den Zufuhrkanal mit der eingeschnürten Eingangsöffnung und dem Führungskanal aufweist und das austauschbar an dem Absperrteil befestigt ist.

10. Vorrichtung nach Anspruch 9, dadurch gekennzeichnet, dass das rohrförmige Element aus Polytetrafluoräthylen hergestellt ist.

11. Vorrichtung nach einem der Ansprüche 7 bis 10, dadurch gekennzeichnet, dass das Gehäuse durch einen Deckel mit einer zentralen Durchlassöffnung abgeschlossen und mit einer Zuführungsöffnung zum Zuführen eines Gases zu dem zwischen dem Absperrteil und dem Deckel liegenden Raum des Gehäuses versehen ist.

12. Vorrichtung nach einem der Ansprüche 7 bis 11, dadurch gekennzeichnet, dass das Gehäuse eine Umlaufkammer aufweist, die den der Ausströmungsöffnung zugewandten Teil der Kammer umgibt.

## Claims

1. A method of coating a fibre, in which a fibre to be coated is passed through an inlet duct with a restricted inlet opening, is guided through a pressure chamber filled with liquid coating material, is drawn through the outlet opening of a nozzle, the coating material being supplied under pressure to the pressure chamber, characterized in that the coating material is supplied at such a pressure and in such a quantity that the material rises in the inlet duct up to a certain level to form a convex meniscus.

2. A method as claimed in Claim 1, characterized in that the fibre is guided from the restricted inlet opening to the pressure chamber _via_ a guide duct.

3. A method as claimed in Claim 1 or 2, characterized in that the temperature of the coating material present in the pressure chamber is adjusted so that a coating layer of the desired thickness is obtained.

4. A method as claimed in Claim 1, 2 or 3, characterized in that above the inlet opening a gas atmosphere is produced and maintained which consists of a gas having a kinematic viscosity lower than that of air.

5. A method as claimed in Claim 4, characterized in that xenon is used as gas.

6. A method as claimed in Claim 4, characterized in that dichlorodifluoromethane is used as gas.

7. An arrangement for carrying out the method as claimed in any one of Claims 1 to 6 comprising a housing with a pressure chamber, a nozzle with an outlet opening which is in communication with the pressure chamber, a closure part provided with an inlet duct with a restricted inlet opening, said closure part closing the pressure chamber on the upper side, a supply opening in the wall of the housing for the supply of liquid coating material and an overflow opening in the sidewall of the housing, characterized in that the overflow opening in the sidewall of the housing is provided at a height lower than the level of the restricted inlet opening.

8. An arrangement as claimed in Claim 7, in which the inlet duct has a guide duct for the guidance of a fibre to be coated, characterized in that the guide duct forms a connection between the restricted inlet opening and the pressure chamber.

9. An arrangement as claimed in Claim 8, characterized by a tubular member which comprises the inlet duct with the restricted inlet opening and the guide duct and which is exchangeably secured on the closure part.

10. An arrangement as claimed in Claim 9, characterized in that the tubular member is made of polytetrafluoroethylene.

11. An arrangement as claimed in any one of Claims 7 to 10, characterized in that the housing is closed by a cover with a central passage opening and is provided with a supply opening for the supply of a gas to the space of the housing located between the closure part and the cover.

12. An arrangement as claimed in any one of Claims 7 to 11, characterized in that the housing has a circulation chamber which surrounds the part of the chamber facing the outlet opening.

**Revendications**

1. Procédé pour l'enduction d'une fibre, selon lequel une fibre à enduire est passée à travers un canal d'amenée présentant un orifice d'entrée resserré, est guidée à travers une chambre de pression remplie de matière d'enduction liquide et est tirée à travers l'orifice de sortie d'un ajutage, la matière d'enduction étant introduite sous pression dans la chambre sous pression, caractérisé en ce que la matière d'enduction est admise sous une pression et en une quantité telles qu'elle s'élève jusqu'à un niveau déterminé dans le canal d'amenée et forme un ménisque convexe.

2. Procédé suivant la revendication 1, caractérisé en ce que la fibre est amenée dans la chambre de pression par l'intermédiaire d'un canal de guidage à sa sortie de l'orifice d'entrée resserré.

3. Procédé suivant la revendication 1 ou 2, caractérisé en ce que la température de la matière d'enduction présente dans la chambre est réglée d'une manière telle que l'on obtienne un enduit présentant l'épaisseur souhaitée.

4. Procédé suivant la revendication 1, 2 ou 3, caractérisé en ce qu'au-dessus de l'orifice d'entrée est produite et maintenue une atmosphère gazeuse qui est constituée d'un gaz présentant une viscosité cinématique plus faible que celle de l'air.

5. Procédé suivant la revendication 4, caractérisé en ce que le gaz utilisé est le xénon.

6. Procédé suivant la revendication 4, caractérisé en ce que le gaz utilisé est le dichlorodifluorométhane.

7. Dispositif pour l'exécution du procédé suivant l'une quelconque des revendications 1 à 6, comprenant un corps avec une chambre de pression, un ajutage avec un orifice de sortie, un élément d'obturation avec un canal d'amenée présentant un orifice d'entrée resserré qui ferme la chambre de pression à sa face supérieure, un orifice d'amenée dans la paroi du corps pour l'apport d'une matière d'enduction liquide et un orifice de trop-plein dans la paroi latérale du corps, caractérisé en ce que l'orifice de trop-plein dans la paroi latérale du corps est situé à un niveau qui est inférieur au plan de l'orifice d'entrée.

8. Dispositif suivant la revendication 7, dans lequel le canal d'amenée comporte un canal de guidage pour guider une fibre à enduire, caractérisé en ce que le canal de guidage établit une jonction entre l'orifice d'entrée resserré et la chambre de pression.

9. Dispositif suivant la revendication 8, caractérisé par un élément tubulaire qui comporte le canal d'amenée avec l'orifice d'entrée resserré et le canal de guidage et qui est fixé de manière échangeable à l'élément d'obturation.

10. Dispositif suivant la revendication 9, caractérisé en ce que l'élément tubulaire est fabriqué en polytétrafluoroéthylène.

11. Dispositif suivant l'une quelconque des revendications 7 à 10, caractérisé en ce que le corps est fermé par un couvercle percé d'une ouverture de traversée centrale et est pourvu d'un orifice d'alimentation pour l'admission d'un gaz dans l'espace du corps situé entre l'élément d'obturation et le couvercle.

12. Dispositif suivant l'une quelconque des revendications 7 à 11, caractérisé en ce que le corps comporte une chambre de circulation qui entoure la partie de la chambre tournée vers l'orifice de sortie.

FIG.1

FIG.2

FIG.3

1

FIG.4

FIG.5

FIG.6

FIG.7

FIG.8

5